# EUROPEAN PATENT APPLICATION

(11) **EP 0 579 341 A2**
(43) Date of publication of application: **19.01.1994**
(21) Application number: 93202797.2
(22) Date of filing: 20.02.1990
(51) Int. Cl.: G06F 15/80

(54) **Learning machine with multi-input single output circuits connected in hierarchical structure**

(30) Priority: 23.02.1989 JP 43730/89; 28.02.1989 JP 47610/89
(62) Divisional of application: 90301825.7
(71) Applicant: MATSUSHITA ELECTRIC INDUSTRIAL CO., LTD., Kadoma-shi, Osaka-fu, 571 (JP)
(72) Inventor: Sakaue, Shigeo, Takarazuka-shi (JP); Kohda, Toshiyuki, Takatsuki-shi (JP); Shimeki, Yasuharu, Suita-shi (JP); Takagi, Hideyuki, Tsuzuki-gun, Kyoto (JP); Togawa, Hayato, Tokyo (JP)
(74) Representative: Smith, Norman Ian

(57) **Abstract**

In a learning machine with multi-input single-output circuits (18, 19, 20) connected in a hierarchical structure which sums up weighted input signals and subjects the sum thus obtained to a non-linear processing to provide an output signals, each weight is changed (16, 65) to provide a desired value of each output signal in learning. Using, as a direction of changing the weight, a conjugate gradient direction is used in place of the most sudden drop direction which has been conventionally adopted can reduce the time required for the learning. Also dynamically setting, as a learning parameter, an optimum value in place of a fixed value which has been conventionally adopted can reduce the time required for learning. Moreover, in calculating errors for plural learning parameters relative to a certain weight changing direction, a product-sum of the input signals and weights in a secret layer (22) and a product-sum of the input signals and the weight changing direction in the secret layer are stored (77) so that the number of operations of acquiring outputs from the secret layer thereby to greatly reduce the time required for learning. Furthermore, if it is detected (92) that the learning has been fallen into an unsuitable state where further advancing the learning cannot effectively reduce the errors, the weight are adjusted to resume the learning thereby reducing the time required for learning.

## Description

### BACKGROUND OF THE INVENTION

The present invention relates to a learning machine with multi-input single-output circuits connected in a data processor connected in a hierarchical structure.

An example of the conventional learning machine with multi-input single-output circuits connected in a hierarchical structure is disclosed in e.g. D.E. Rummelhart et al "Learning representations back-propagating errors", Nature Vol. 323 No. 9 (1986). In the conventional learning machine with multi-input single-output circuits connected in a hierarchical structure, each multi-input single output circuit adds up input signals weighted, and subjects the resulting signal to conversion having a saturation characteristic; the output signal thus provided is expressed by 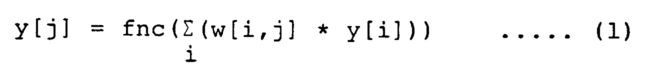
where y[j] is an output signal from a j-th multi-input single-output, y[i] is an output signal from an i-th multi-input single-output circuit in a previous stage layer, and w[i,j] is weight charged on the output signal from the i-th multi-input single-output circuit in the previous stage layer when it is supplied to the j-th multi-input single-output circuit. fnc( ) is a function having a saturation frequency which can be expressed by e.g. a sigmoidal function 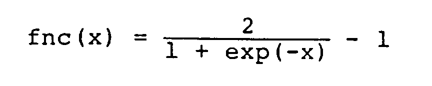
A learning machine is usually structured in such a manner that multi-input single-output circuits are connected in a hierarchical structure and learns to provide a desired output signal (hereinafter referred to a 'teacher signal') in response to input signals. In the learning, an error E is acquired from the teacher signal and an actual output signal in accordance with Equation (2) 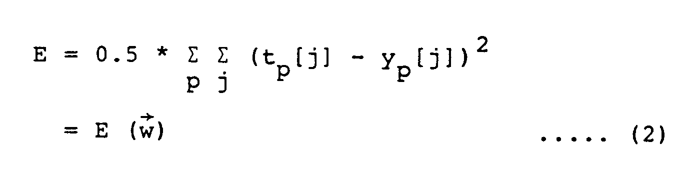
where yₚ[j] is an output signal from a j-th multi-input single-output circuit in an output layer for a p-th input signal, tₚ[j] is a teacher signal for yₚ[j], 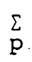
is a sum of the teacher signals, 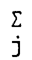
is a sum of the outputs from all the multi-input single-output circuits in the output layer, and 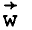 is vector including weight [i,j] as a component (hereinafter referred to weight vector).

As seen from Equation (2), the error E can be expressed as a square sum of a difference between a teacher signal and an actual output signal and so is a function of the weight vector w. A purpose of the learning is to change the weight vector to minimize a difference between the teacher signal and the actual output signal, i.e. an error. The amount of changing the weight vector is decided by 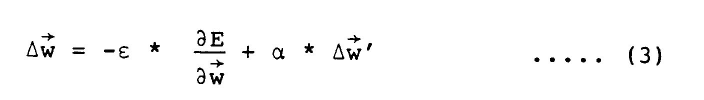
where ε is a positive constant referred to as a learning parameter, α is a positive constant referred to as an accelerating parameter, ∂E/∂ 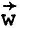 is a vector including as a component the differentiation of the error expressed by Equation (2) by the weight w[i,j], which is referred to as the most sudden drop direction, and Δ 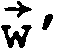 is vector representation of the weight changing amount in the previous learning. Such a learning algorithm is generally referred to as an error back-propagation method.

The conventional learning machine with multi-input single-output circuits connected in a hierarchical structure, the learning parameter ε and the accelerating parameter α are fixed; they are decided through experience or try and error and so not necessarily optimum values. This lengthens the time required for learning. Moreover, the error back-propagating method based on the most sudden drop method, used for minimizing the error which is a purpose of learning, is not necessarily optimum. Further, as the case may be, the learning will be fallen into a non-effective state where further advancing the learning does not reduce any error.

### SUMMARY OF THE INVENTION

In view of the problems mentioned above, an object of the present invention is to provide a learning machine with multi-input single-output circuits connected in a hierarchical structure which can shorten the time required for learning by using, as a method of minimizing an error between a teacher signal (desired output signal) and an actual output signal, a conjugate gradient method which is considered more excellent than the most sudden drop method.

Another object of the present invention is to provide a learning machine with multi-input single-output circuits connected in a hierarchical structure which can shorten the time required for learning by advancing the learning with the optimum value of a learning parameter dynamically set.

A further object of the present invention is to provide a learning machine with multi-input single-output circuits connected in a hierarchical structure which can shorten the time required for learning by reducing the amount of operation in calculating errors for plural learning parameters relative to a predetermined weight changing direction.

Yet another object of the present invention is to provide a learning machine with multi-input single output circuits connected in a hierarchical structure which can shorten the time required for learning by readjusting the weight to resume the learning when detecting that the learning has been fallen into an ineffective state where further advancing the learning does not reduce an error.

In accordance with the present invention, there is provided a learning machine with multi-input single-output circuits connected in a hierarchical structure comprising a secret layer consisting of plural multi-input single-output circuits which subject a weighted sum of input signals to a non-linear processing by a characteristic function having a saturation characteristic to provide output signals, an output layer consisting of plural multi-input single-output circuits which subject a weighted sum of the output signals from said secret layer to a non-linear processing by a characteristic function having a saturation characteristic to provide output signals, a teacher signal generating unit for generating desired teacher signals for said output layer, a weight changing direction deciding unit for selecting and deciding, from plural directions, the weight changing direction for minimizing errors between outputs from said teacher signal generating unit and outputs from said output layer, a straight-line searching unit for producing weight changing amounts for plural learning parameters with respect to the weight changing direction, a weight changing unit for selecting weight changing amounts from the weight changing amounts acquired by said straight line searching unit, a secret layer product-sum storage unit for storing a product sum of input signals and weight of the secret layer and a product sum of the input signals and the direction of changing the weight of the secret layer, and unsuitable learning state detecting unit for detecting that the learning has been fallen into an unsuitable state where advancing the learning does not effectively reduce the error.

By means of the construction, the present invention subjects weighted sum of input signals to a non-linear processing to provide an output signal in both secret layer and output layer; in order to minimize an error between a desired output signal generated by the teacher signal generating unit and an actual output signal; selects and decides the weight changing direction from plural directions in the weight changing deciding unit; acquires the weight changing amounts for plural learning parameters in the straight-line searching unit; on the basis of the product sum of the input signals and the weight in the secret layer and the sum of the input signals and the direction of changing the weight in the secret layer which are stored in the secret layer product sum storage unit, acquires with less amount of processing an output from the secret layer for the weight changing amount set in the straight-line in the secret layer and the output layer; and finally, checking in the unsuitable learning state detecting unit if or not the earning has been fallen into an uneffective state, selects in the weight changing unit the weight changing amounts from the weight changing amounts acquired by the straight-line searching unit to change the weights. Thereafter, in the same manner, the operation of changing weights is repeated using a learning parameter of minimizing an error in a weight changing direction thereby to sufficiently reduce the errors. Thus, when the weight changing direction has been decided, an optimum learning parameter is dynamically set in that direction, and the weights are changed using the optimum learning parameter to reduce the error so that the error can be sufficiently reduced in a short learning time to complete the learning.

In the present invention, in order to minimize the error, the weight changing direction is decided by the above weight changing direction deciding unit. As the weight changing direction, the most sudden drop direction is locally the most effective direction in that the greatest amount of reducing the error can be given with the smallest amount of changing the weight in the neighborhood of the present weight value. On the other hand, a conjugate gradient direction is generally the most effective direction in that the weight is changed in a different direction from the weight changing direction in the previous learning. The present invention, therefore, selects an optimum weight changing direction from plural directions thereby to shorten the time required for learning.

The present invention, by storing, in the above secret layer product sum storage unit, the product sum of the input signals and the weight in the secret layer and the sum of the input signals and the direction of changing the weight in the secret layer, greatly reduces the amount of operation of acquiring the outputs from the secret layer in calculating the errors for plural learning parameters with the weight changing direction fixed, thereby shortening the time required for learning.

The present invention, when the above unsuitable learning state detecting unit detects that changing the weight toward the most sudden drop direction or the conjugate gradient direction cannot reduce the error, decides that the learning has been fallen into the uneffective state and readjust the weight to resume the learning, thereby preventing the learning from being fallen into the uneffective state to shorten the time required for learning.

### BRIEF DESCRIPTION OF THE DRAWINGS

Fig. 1 is a block diagram showing the general arrangement of the conventional learning machine with multi-input single-output circuits connected in a hierarchical structure;
Fig. 2 is a block diagram showing the detailed arrangement of the conventional learning machine with multi-input single-output circuits connected in a hierarchical structure;
Fig. 3 is a graph of the characteristic function of an adder having a saturation input/output characteristic in the conventional learning machine of Fig. 2;
Fig. 4 is a block diagram showing the arrangement of a learning circuit in the conventional learning machine with multi-input single-output circuits connected in a hierarchical structure;
Fig. 5 is a block diagram showing the details of the learning circuit of Fig. 4;
Fig. 6 is a block diagram showing the learning machine with multi-input single-output circuits connected in a hierarchical structure according to a first embodiment of the present invention;
Fig. 7 is a block diagram showing the arrangement of the learning circuit in the embodiment of Fig. 6;
Fig. 8 is a block diagram of the detailed arrangement of a conjugate gradient deciding unit in the embodiment of Fig. 6;
Fig. 9 is a block diagram showing the learning machine with multi-input single-output circuits connected in a hierarchical structure according to a second embodiment of the present invention;
Fig. 10 is a block diagram showing the arrangement of the learning circuit in the embodiment of Fig. 9;
Fig. 11 is a schematic view of contour lines of a error curve for explaining the operation of the embodiment of Fig. 9;
Fig. 12 is a sectional view between the starting point and point P of the error curve for showing the operation of the embodiment of Fig. 9;
Fig. 13 is a PAD (Problem Analysis Diagram) showing the operation of searching a straight line in the embodiment of Fig. 9;
Fig. 14 is a block diagram showing the learning machine with multi-input single-output circuits connected in a hierarchical structure according to a third embodiment of the present invention;
Fig. 15 is a schematic view of contour lines of a error curve for explaining the operation of the embodiment of Fig. 14;
Fig. 16 is a block diagram showing the learning machine with multi-input single-output circuits connected in a hierarchical structure according to a fourth embodiment of the present invention;
Fig. 17 is block diagram showing the detailed arrangement of a secret layer product sum storage unit in the embodiment of Fig. 16; and
Fig. 18 is a block diagram showing the learning machine with multi-input single-output circuits connected in a hierarchical structure according to a fourth embodiment of the present invention.

### DESCRIPTION OF THE PREFERRED EMBODIMENTS

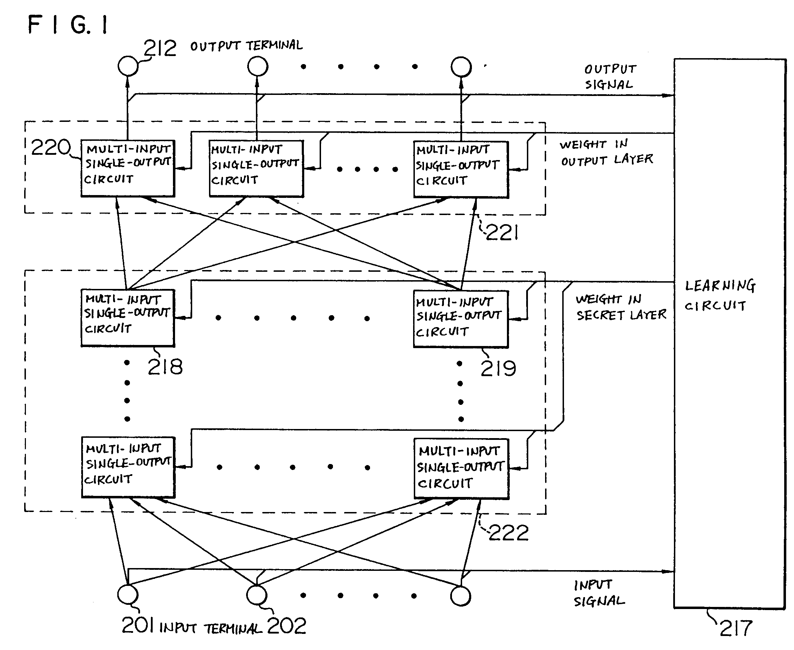

Prior to explaining several embodiments of the present invention, the conventional learning machine with multi-input single-output circuits connected in a hierarchical structure will be further explained with reference to Figs. 1 to 5.

Fig. 1 shows the general arrangement of the conventional learning machine with multi-input single-output circuits connected in a hierarchical structure. In Fig. 1, 201 and 202 are input terminals; 212 is an output terminal; 217 is a learning circuit; 218, 219, and 220 are multi-input single-output circuits; 221 is an output layer; and 222 is a secret layer. As seen from Fig. 1, the learning machine, through the construction in which multi-input single-output circuits are connected in a hierarchical structure, process input signals from input terminals 201, 202 to provide output signals at the output terminals. Among the multi-input single-output terminal circuits, the layer consisting of the multi-input single-output circuits generating the output signals is referred to the output layer, and the layer consisting of the other multi-input single-output circuits is referred to the secret layer. The secret layer may be a single layer of the multi-input single-output circuits or plural layers thereof.

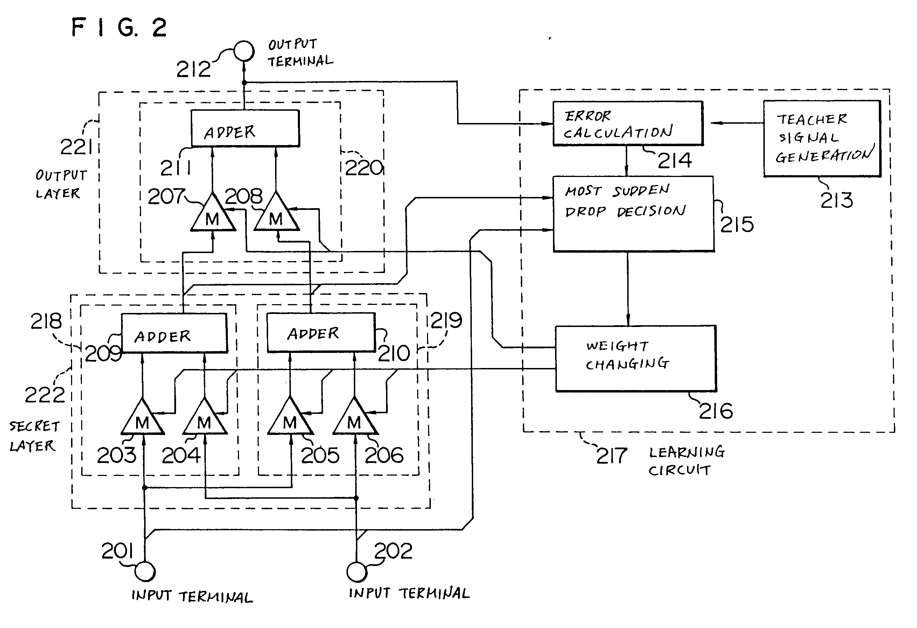

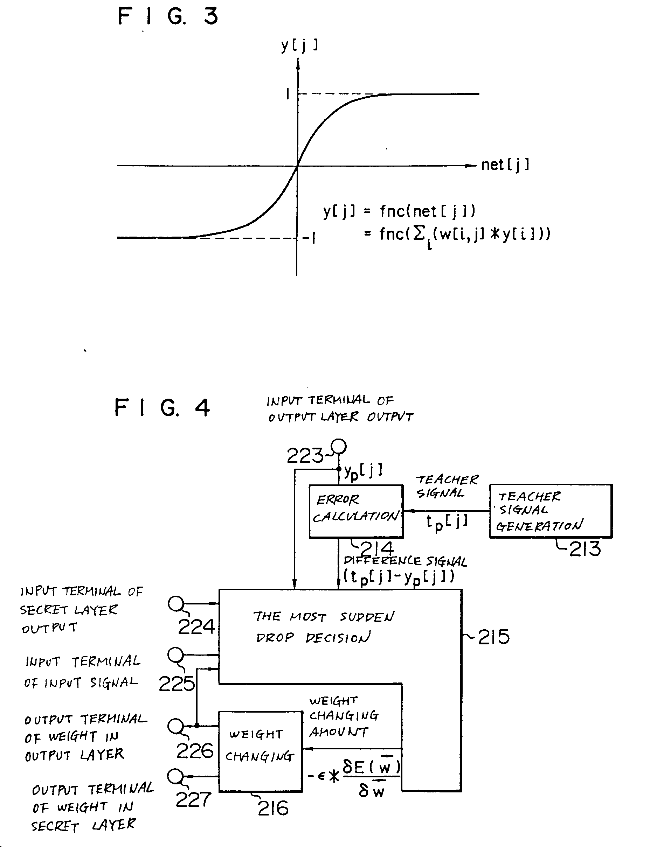

Fig. 2 shows the detailed arrangement of the conventional learning machine with multi-input single-output circuits connected in a hierarchical structure. In Fig. 2, 203, 204, 205, 206, 207 and 208 are variable weight multipliers; 209, 210 and 211 are adders having a saturation input/output characteristic; 212 is an output terminal; 213 is a teacher signal generating unit; 214 is an error calculating unit; 215 is the most sudden drop direction decision unit; and 216 is a weight changing unit. In the general arrangement of the learning machine of Fig. 1, the learning machine shown in Fig. 2 comprises the output layer consisting of one multi-input single-output circuit and the secret layer of one layer consisting of two multi-input single-output circuits. As seen from Fig. 2, each multi-input single-output consists of two variable weight multipliers and one adder. Thus, the learning machine is constructed so that plural multi-input single-output circuits are connected in a hierarchical structure. Fig. 3 is a graph of the characteristic of the adders 209, 210 and 211 having a saturation input/output characteristic. The adders 209, 210 and 211 have the saturation input/output characteristic.

The conventional learning machine with multi-input single-output circuits connected in a hierarchical structure, in order to provide a desired output signal for input signals, changes the weight applied to the input signals by the variable weight multiplier. Fig. 4 shows the arrangement of the learning circuit 217 of this conventional learning machine. In Fig. 4, 223 is an input terminal of the output from the output layer; 224 is an input terminal of the output from the secret layer; 225 is an input terminal of the input signals; 226 is an output terminal of the weight in the output layer; and 227 is an output terminal of the weight in the secret layer. In the conventional multi-input single-output circuits connected in a hierarchical structure, the teacher signal generating unit 213 generates a teacher signal (desired output signal) tₚ[j] for the input signals. The error calculating unit 214 calculates an error E expressed by Equation (2) from the teacher signal tₚ[j] and an actual output signal yₚ[j]. The error calculating unit sends a difference signal between the teacher signal and the output signal tₚ[j] - yₚ[j], which is required to change the weight, to the most sudden drop direction decision unit 215. On the basis of the above difference signal, the output signal from the output layer, the output signal from the secret signal, the input signals and the weight in the output layer, the most sudden drop direction decision unit 215 acquires the most sudden drop direction of the error E in a weight space where the weight is expressed in vector. The most sudden drop direction can be expressed by 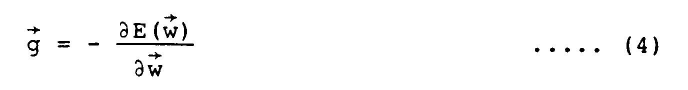
The right side of Equation (4) is an vector expression of the differentiation of the error E by weight. The most sudden drop direction decision unit 215 multiplies the most sudden drop direction by a learning parameter to provide an output to the weight changing unit 216. The weight changing unit 216 acquires the weight changing amount from Equation (3) and changes the weight to be multiplied in the respective variable weight multipliers 203, 204, 205, 206, 207 and 208. In this way, the operation of acquiring the weight changing amount is repeated by the most sudden drop method to gradually reduce the error. When the error has been sufficiently decreased, decision that the output signal has approached the desired value is made to complete the learning.

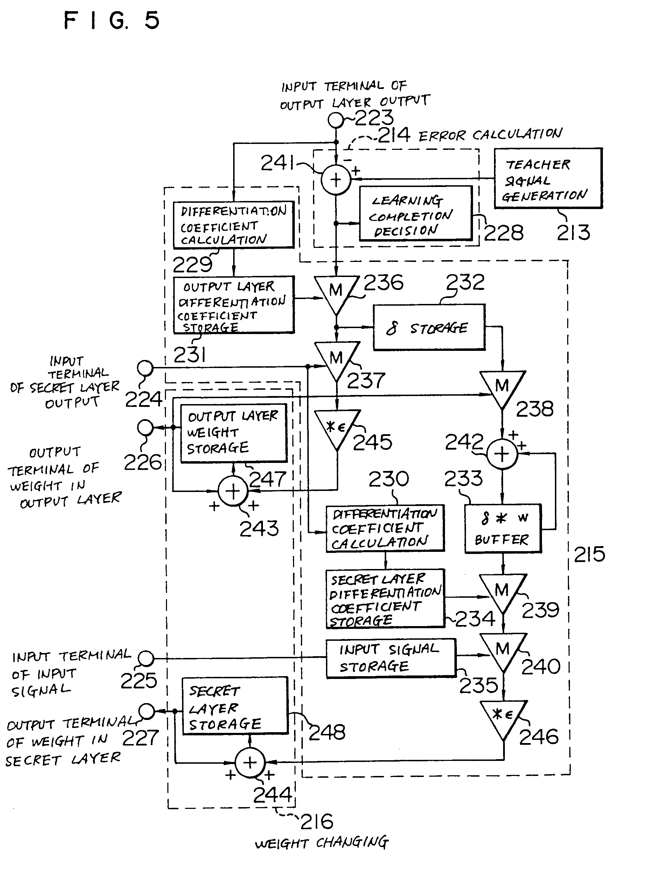

Fig. 5 shows the details of the learning circuit 217 in the conventional learning machine with multi-input single-output circuits connected in a hierarchical structure. In Fig. 5, 228 is a learning completion decision unit; 229 and 230 are differentiation coefficient calculation unit; 231 is an output differentiation coefficient storage unit; 232 is a δ storage unit; 233 is a δ * w buffer; 234 is a secret layer differentiation coefficient storage unit; 235 is an input signal storage unit; 236, 237, 238, 239 and 240 are multipliers; 241, 242, 243 and 244 are adders; 245 and 246 are learning parameter multipliers; 247 is an output layer weight storage unit; and 248 is a secret layer weight storage unit.

Referring to Fig. 5, the operation of the learning circuit will be explained. the weight changing amount supplied from the most sudden drop direction decision unit 215 can be expressed by 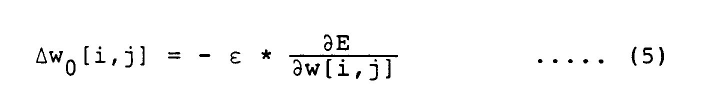
where w[i,j]is the weight to be multiplied by the output signal from an i-th multi-input single-output circuit in the previous layer, which is supplied to a j-th multi-input single-output circuit, Δw_{g}[i,j]is the weight changing amount of w[i,j] relative to the most sudden drop direction, and ε is a learning parameter. Equation (5) can be transformed into 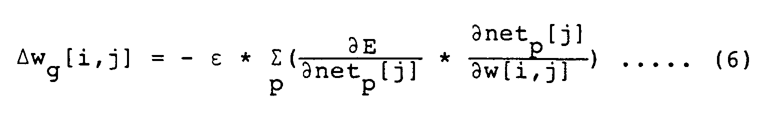
where 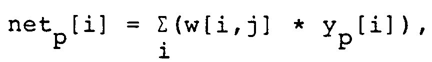
and yₚ[i] is an output signal from an i-th multi-input single-output circuit in the previous layer corresponding to a p-th input signal. Equation (6) can be further transformed into 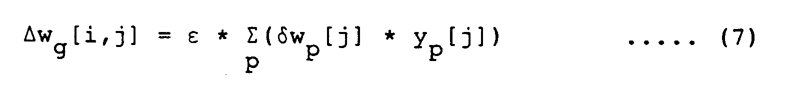
where 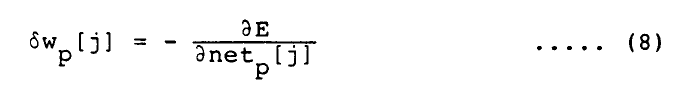
The manner of transforming the equation depends on whether the j-th multi-input single-output circuit resides in the output layer or the secret layer. * When the j-th multi-input single-output circuit resides in the output layer, 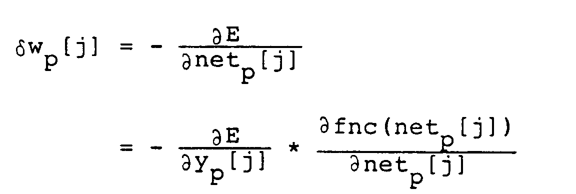
where fnc(netₚ[j]) is a characteristic function (= yₚ[j]) of each multi-input single-output circuit in the output layer. Using Equation (2), this equation can be further transformed into 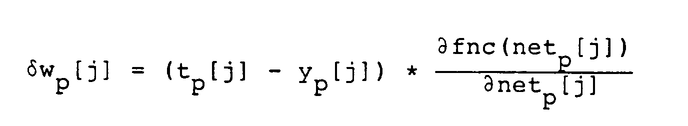
Consequently, it can be expressed by 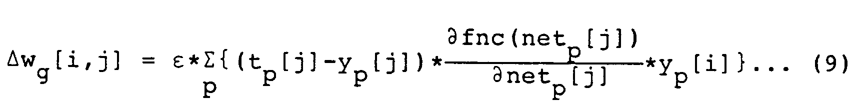
In Fig. 5, the adder 241 calculates (tₚ[j] - yₚ[j]) in Equation (9), the differentiation coefficient unit 229 calculates ∂fnc(netₚ[j])/∂netₚ[j], and the multiplier 236 calculates (tₚ[j] - yₚ[j]) * ∂fnc(netₚ[j])/∂netₚ[j] through the output layer differentiation coefficient storage unit 231. This value, which is δwₚ[j], is stored in the δ storage unit 232. The multiplier 237 calculates a product of δwₚ[j] and the secret layer output yₚ[i]. The multiplier 245 multiplies this product by a learning parameter ε to provide Δw_{g}[i,j] expressed by Equation (9), α times of the weight changing amount in the previous learning is added to Δw_{g}[i,j] of Equation (9) to provide the weight changing amount Δw[i,j] expressed by Equation (3). The adder 243 calculates a sum of this weight changing amount and the weight before change thereby changing the weight in the output layer stored in the output layer weight storage unit 247.
* When the j-th multi-input single-output circuit resides in the secret layer, 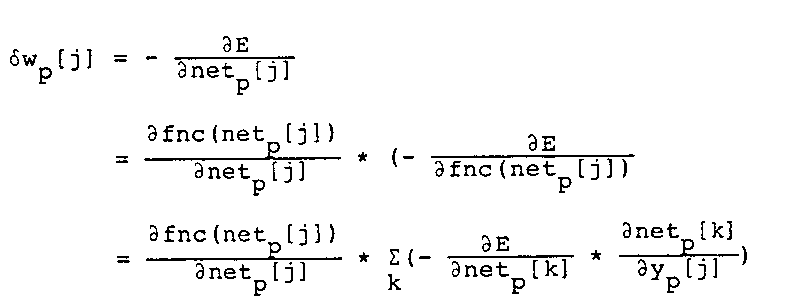
where ${\text{net}}_{\text{p}} {\text{[i] = Σ(w[i,j]*y}}_{\text{p}} \text{[i])}$ , and w [i,j] is a weight to be imposed on the output yₚ of the j-th multi-input single-output circuit when it is supplied to the multi-input single-output circuit in a next stage. Using Equation (8), this equation can be further transformed into 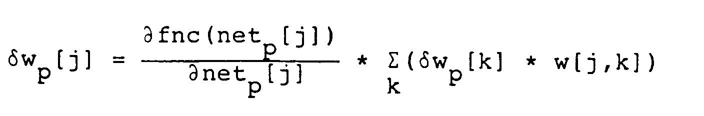
Consequently, it can be expressed by 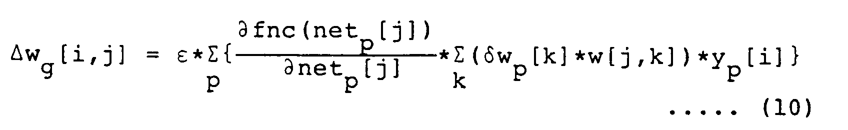
In Fig. 5, the multiplier 238 calculates a product of the an output δwₚ[k] from the δ storage unit 232 and the weight w[j] in the output layer, and the δ * w buffer 233 and the adder 242 calculates 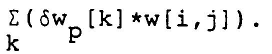
The differentiation coefficient ∂fnc(netₚ[j])/∂netₚ[j], is supplied to the multiplier 229 through the secret layer differentiation coefficient storage unit 239 which calculates a product of this coefficient and the above 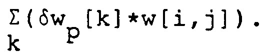
The multiplier 240 multiplies this product by the input signal yₚ[i]. The multiplier 246 multiplies this product by a learning parameter ε to provide Δw_{g}[i,j] expressed by Equation (10). α times of the weight changing amount in the previous learning is added to Δw_{g}[i,j] of Equation (10) to provide the weight changing amount Δw[i,j] expressed by Equation (3). The adder 244 calculates a sum of this weight changing amount and the weight before change thereby changing the weight in the output layer stored in the output layer weight storage unit 248.

In this way, in order to reduce an error between an output signal from the output layer and a teacher signal, the amount of changing the weight in the output layer is first acquired using a difference signal between the output signal and the teacher signal, and the weight changing amount is successively acquired from the output side towards the input side. Such a learning algorithm is referred to an error reverse propagating method.

In the conventional learning machine having the construction described above, the learning parameter ε and the accelerating parameter α are fixed; they are decided through experience or try and error and so not necessarily optimum values. This lengthens the time required for learning. Moreover, the weight changing direction using the differentiation of the error E by the weight (i.e. the most sudden drop direction) is not necessarily optimum. Further, as the case may be, the learning will be fallen into a non-effective state where further advancing the learning does not reduce any error.

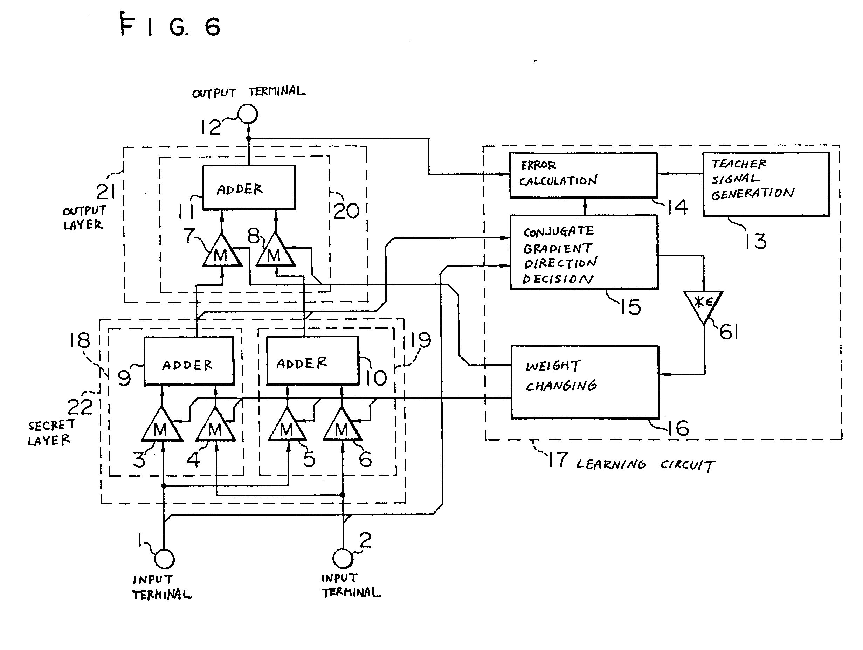

Fig. 6 shows the arrangement of a learning machine with multi-input single-output circuits connected in a hierarchical structure according to a first embodiment of the present invention. In Fig. 6, 1 and 2 are input terminals; 3, 4, 5, 6, 7 and 8 are variable weight multipliers; 9, 10 and 11 are adders having a saturation input/output characteristic; 12 is an output terminal; 13 is a teacher signal generating unit; 14 is an error calculating unit; 15 is a conjugate gradient direction decision unit; 18 is a weight changing unit; 17 is a learning circuit; 18, 19 and 20 are multi-input single-output circuits; 21 is an output layer; 22 is a secret layer; and 61 is a learning parameter multiplier.

In the learning machine according to this embodiment, multi-input single-output circuits are connected in a hierarchical structure; each circuit consists of variable weight multipliers and an adder having a saturation input/output characteristic. Each multi-input single output circuit adds up input signals, after having been weighted, and subjects the sum to a non-linear processing to provide an output signal. In the learning in the learning machine according to this embodiment, in order that an output from the output layer 21 is equal to an output from the teacher signal generating unit 13, the weight to be imposed in the multipliers 3, 4, 5, 6, 7 and 8 are changed. If the vectors having a weight as a component are referred to as weight vectors, the amount of changing the weight vectors can also be expressed. The direction or sence of this weight changing vector is referred to a weight changing direction. In this embodiment, a conjugate gradient direction is used as the weight changing direction. The conjugate gradient direction is given by 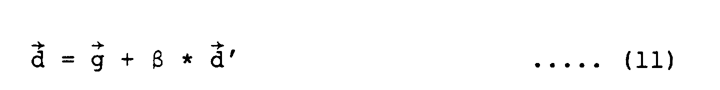
where 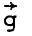 is the most sudden drop direction expressed by Equation (4), and β is a constant expressed by 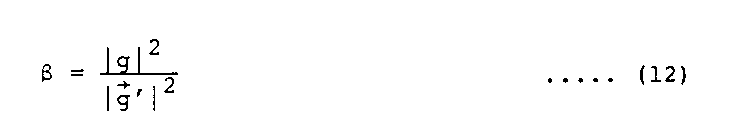
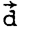 ' is a conjugate gradient direction in the previous learning, and | 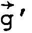 | is the norm of the vector in the most sudden drop direction 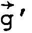 in the previous learning. Incidentally, the weight changing direction in an initial learning is defined as the most sudden drop direction.

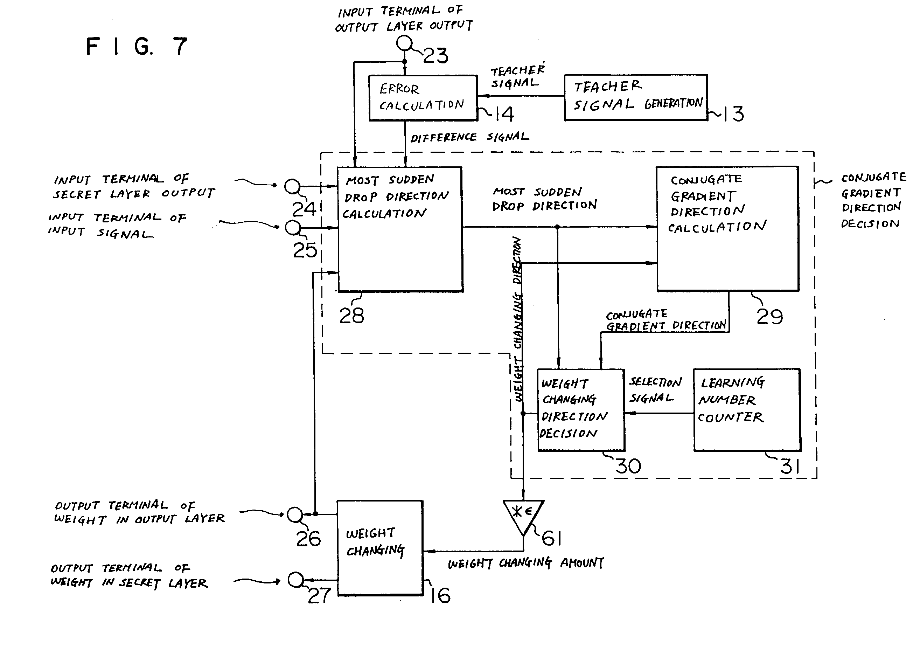

Fig. 7 shows an arrangement of the learning circuit 17. In Fig. 7, 23 is an input terminal of the output from the output layer; 24 is an input terminal of the output from the secret layer; 25 is an input terminal of the input signals; 26 is an output terminal of the weight of the output layer; 27 is an output terminal of the weight of the secret layer; 28 is the most sudden drop calculation unit; 29 is a conjugate gradient direction calculation unit; 30 is a weight changing direction decision unit; and 31 is a learning number counting unit.

Now referring to Fig. 7, explanation will be given for the operation of learning circuit 17 in the learning machine with multi-input single-output circuits connected in a hierarchical structure. The teacher signal generating unit 13 provides a desired signal for the input signal as a teacher signal to the error calculation unit 14 which produces a difference signal between the teacher signal and an actual output signal. The conjugate gradient direction decision unit 15 acquires the weight changing direction from the difference signal. Further, the weight changing unit 16 changes the weight in accordance with the weight changing amount acquired by the learning parameter multiplier 61. The conjugate gradient direction decision unit 15 acquires the weight changing direction in the following manner. The most sudden drop direction calculation unit 28, on the basis of the difference signal provided from the error calculation unit 14, the output signal from the output layer, the input signal and the weight of the output layer, acquires the most sudden drop direction expressed by Equation (4). The conjugate gradient direction calculation unit 29 acquires a conjugate gradient direction from the most sudden drop and the weight changing direction in the previous learning. The learning number counting unit 31 counts the number of learning to provide a selection signal which of the most sudden drop and the conjugate gradient direction is to be used as a weight changing direction. Generally in the conjugate gradient method, using the most sudden drop accelerates the convergence of the error for the learning every number of the weights. Therefore, in this embodiment also, the learning number counting unit 31 produces the selection signal so that the most sudden drop direction is used for the learning every number of the weights. The weight changing direction decision unit 31 changes the weight changing direction between the most sudden drop direction and the conjugate gradient direction in accordance with the selection signal produced from the learning number counting unit 31. The learning parameter multiplier 61 multiplies the weight changing direction thus decided by a learning parameter to provide a weight changing amount. Finally, the weight changing unit 16 changes the weight.

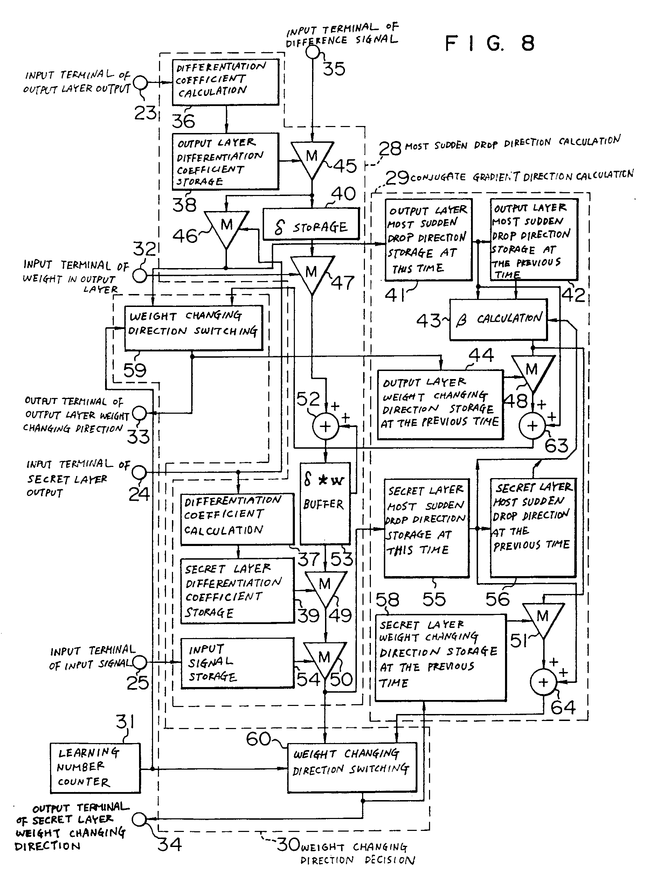

The details of the conjugate gradient decision unit 15 are shown in Fig. 8. In Fig. 8, 32 is an input terminal of the weight of the output layer; 33 is an output terminal of the direction of changing the weight of the output layer; 34 is an output terminal of the direction of changing the weight of the secret layer; 35 is an input terminal of the difference signal; 36 and 37 are differentiation coefficient calculation unit; 38 is an output layer differentiation coefficient storage unit; 39 is a secret layer differentiation coefficient storage unit; 40 is a δ storage unit; 41 is an unit for storing the most sudden drop direction in the output layer at this time; 42 is a unit of storing the most sudden drop direction in the output layer at the previous time; 43 is a β calculation unit; 44 is a unit of storing the direction of changing the weight of the output layer at the previous time; 45, 46, 47, 48, 49, 50 and 51 are multipliers; 52 is an adder; 53 is a δ * w buffer; 54 is an input signal storage unit; 55 is a unit of storing the most sudden drop direction in the secret layer at this time; 56 is a unit of storing the most sudden drop direction in the secret layer at the previous time; 58 is a unit of storing the direction of changing the weight of the secret layer at the previous time; 59 and 60 are weight changing direction switching unit; and 63 and 64 are adders.

With reference to Fig. 8, detailed explanation will be given for the operation of the conjugate gradient direction decision unit 15. The most sudden drop direction calculation unit 28 has substantially the same arrangement as that of the most sudden drop calculation unit 215 of the conventional learning machine with multi-input single-output circuits as shown in Fig. 5. The multiplier 46 provides the most sudden drop direction relative to the weight of the output layer, and the multiplier 51 provides the most sudden drop direction relative to the secret layer. The signals indicative of thesemost sudden drop directions are sent to the weight changing direction switching units 59 and 60 in the weight changing direction decision unit 30 and also to the this time output layer most sudden drop direction storage unit 41 and the this time secret layer most sudden drop direction storage unit 55 in the conjugate gradient direction calculation unit 29. Using Equation (12), the β calculation unit 43 acquires β on the basis of the most sudden drop directions stored in the learning at this time stored in the storage units 41 and 55 and the most sudden drop directions stored in the learning at the previous time stored in the previous time output layer most sudden drop direction storage unit 42 and the previous time most sudden drop direction storage unit 56. The multipliers 48 and 51 acquire products of β thus obtained and the weight changing directions d's in the previous learning. The adders 63 and 64 acquire sums of these products and the most sudden drop directions at this time. These sums are sents, as conjugate gradient directions, to the weight changing direction switching units 59 and 60 in the weight changing direction decision unit 30. Thus, the most sudden drop directions and the conjugate gradient directions are supplied to the weight changing direction switching units 59 and 60. On the other hand, the learning number counting unit 31 counts the number of learning and provide such selection signals as select the most sudden drop direction as the weight changing direction for the learning every number of times equal to the number of the weights and select the conjugate gradient direction for the learning carried out every number of the other times. The weight changing direction switching units 59 and 60 switch the weight changing direction between the most sudden drop direction and the conjugate gradient direction in accordance with these selection signals.

In this way, in the learning machine according to this embodiment, the conjugate gradient direction decision unit 15 provides either the most sudden drop direction or the conjugate gradient direction as the weight changing direction. If the conjugate gradient direction is selected as the weight changing direction, this means that the weight is changed to the direction different from the weight changing direction in the learning until the previous time; this conjugate gradient direction is generally the most effective direction. In accordance with this embodiment, the learning can be completed in a shorter time than in the conventional learning machine which adopts the most sudden drop direction as the weight changing direction.

Incidentally, although in this embodiment, the most sudden drop direction is adopted as the weight changing direction for the learning carried out every number of times equal to that of the weights, the conjugate gradient direction may be adopted in all the cases other than first time learning, or the most sudden drop direction may be adopted for the learning to be carried out every number of times equal to half of the number of the weights. Moreover, although in this embodiment, the secret layer 22 consists of the multi-input single-output circuits each of which processes two input signals to provide an output signal, as in the general arrangement of the conventional learning machine as shown in Fig. 1, the secret layer 22 may consist of the multi-input single-output circuits the number of input/output signals of which may be optional connected in a hierarchical structure.

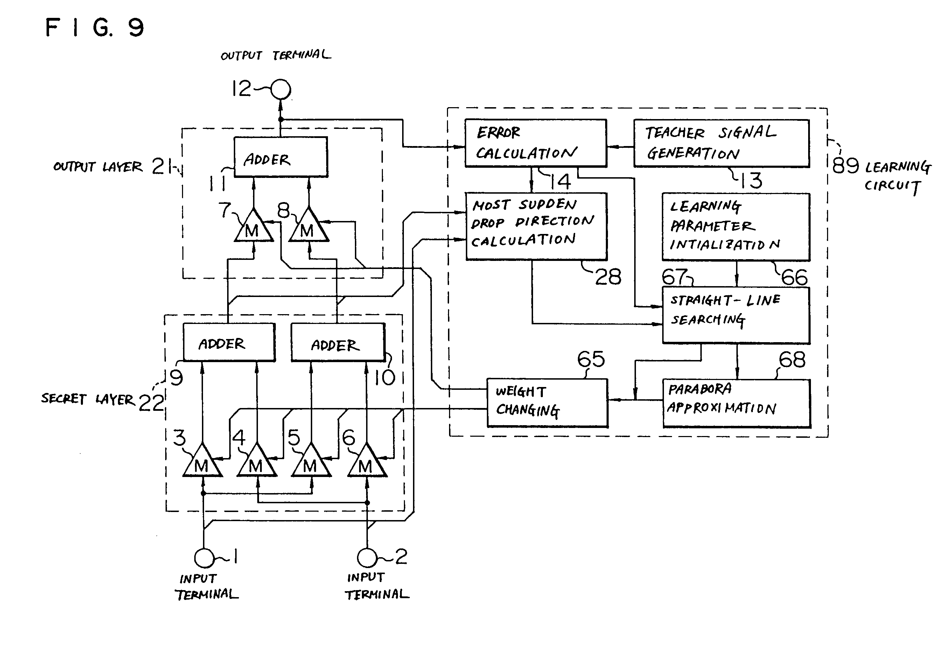

Fig. 9 shows an arrangement of the learning machine with multi-input single-output cricuits connected in a hierarchical structure according to a second embodiment of the present invention. In Fig. 9, 65 is a weight changing unit; 66 is a learning parameter initialization unit; 67 is a straight-line searching unit; 68 is a parabola approximation unit; and 69 is a learning circuit.

As seen from comparison between Figs. 2 and 9, this embodiment is different from the conventional machine in that the learning parameter initialization unit 66, the straight-line searching unit 67 and the parabola approximation unit 68 are provided. Specifically, in the conventional learning machine, the learning parameter is fixed whereas in this embodiment, the weight changing amount for plural learning parameters is acquired by the straight-line searching unit 67, the error for each learning parameter by the secret layer 22, the output layer 21 and the error calculation unit 14, the error curve is parabola-approximated from the error for the learning parameter with a smaller error by the parabola approximation unit 68 so as to provide the errors at the top of the parabola, and using the learning parameter of these errors the weight is changed by the weight changing unit 65.

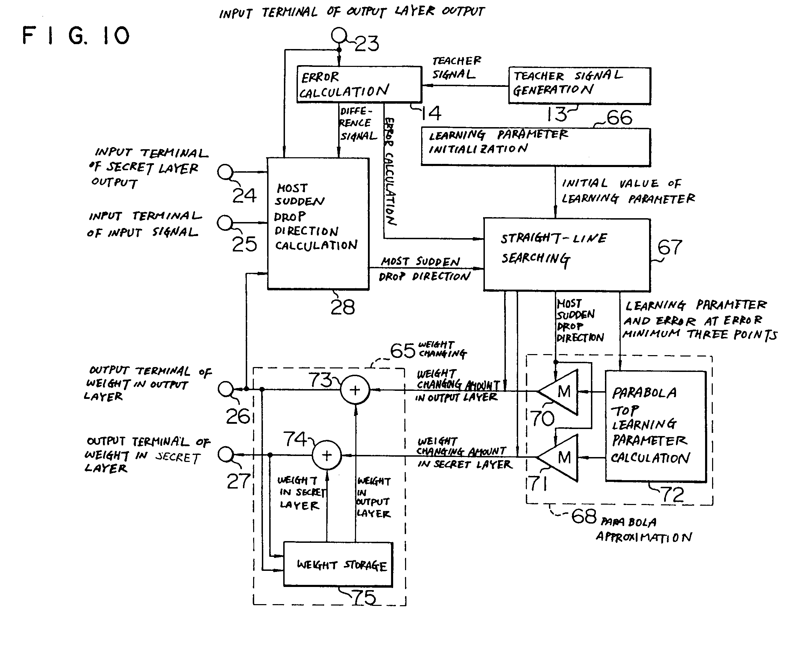

Fig. 10 shows an arrangement of the learning circuit 69 according to this embodiment. In Fig. 10, 70 and 71 are multipliers; 72 is a unit of calculating the learning parameters at the top of a parabola; 73 and 74 are adders; and 75 is a weight storage unit. The teacher signal generating unit 13 generates a teacher signal for the input signal, and the error calculation unit 14 produces a difference signal and error between the actual output signal and the teacher signal. The most sudden drop direction calculation unit 28 acquires the most sudden drop direction as the weight changing direction on the basis of the above error, the output signal from the output layer, the output signals from the secret layer, the input signals, and the weight of the output layer.

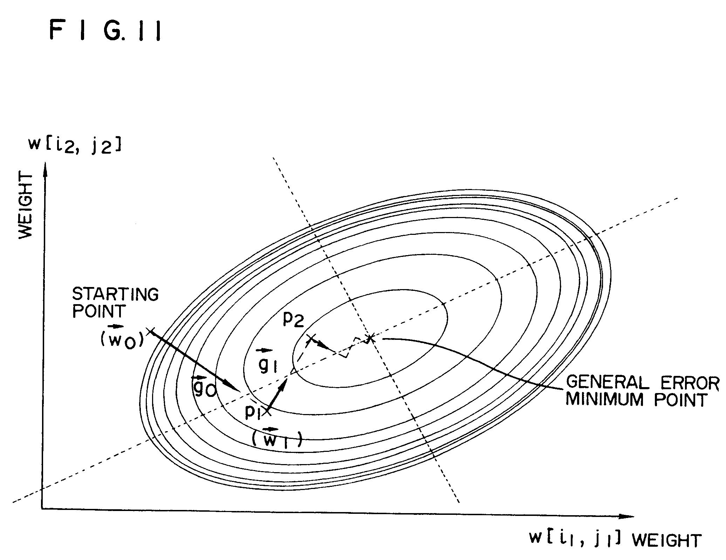

As expressed in Equation (2), the error E, which is the function of a weight vector, can be represented by a curve in the weight space where the weights in the variable weight multipliers 3, 4, 5, 6, 7 and 8 are represented in vectors. This curve is referred to as an error curve. Fig. 11 schematically shows contour lines in the error curve for explaining the operation in this embodiment. In Fig. 11, w[i₁,j₁] and w[i₂,j₂] are weights to be imposed by optional two multipliers of the variable multipliers 3, 4, 5, 6, 7 and 8; 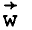 ₀ is vector representation of the value of weight initialized by a random number; 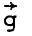 ₀ is the most sudden drop direction in first learning; P₁ is an error minimum point in the first learning; 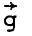 ₁ is the most sudden drop direction at point P₁; and P₂ is an error minimum point in second learning. In the learning by the learning machine according to this embodiment, the weights in all the multipliers are first initialized by a random number; this means that the starting point ( 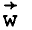 ₀) on the error curve in Fig. 11 is set for the random number. An object of the learning is, by changing the weights to the direction where the error decreases from the starting point on the error curve in Fig. 11, to repeat the search of the error minimum point to reach a general error minimum point. In the first learning, the most sudden drop direction 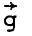 ₀ expressed by Equation (4) is set as the weight changing direction, and the point where the error in the direction of 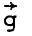 ₀ is minimum is acquired. This is referred to as straight-line searching in the direction of 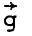 ₀. The learning parameter initialization unit 66 produces a positive value which is suitable as an initial value of the learning parameter in the straight-line searching.

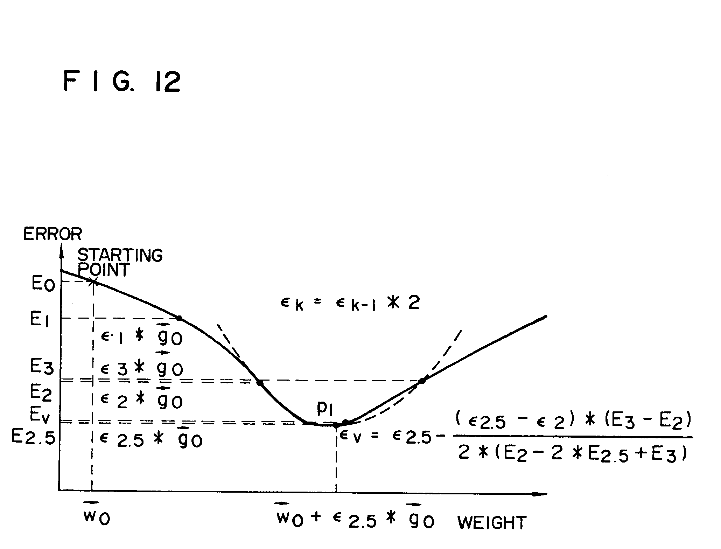

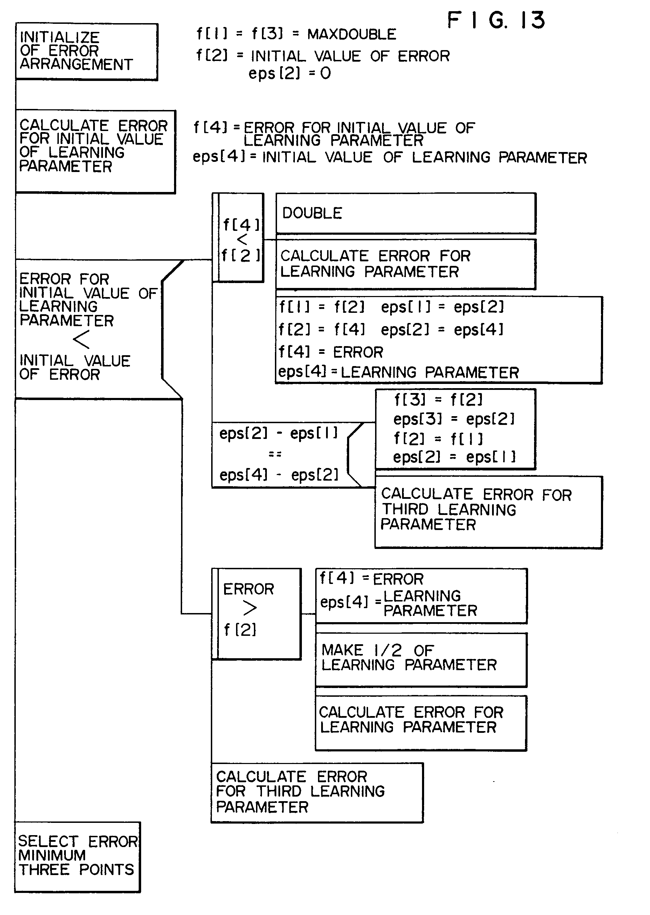

Fig. 12 shows the section between the starting point and point P₁ on the error curve for explaining the operation in this embodiment. In Fig. 13, ε₁ is an initial value of the learning parameter which can be expressed by

${\text{ε}}_{\text{k}} {\text{= ε}}_{\text{k-1}} \text{* 2 (k > 1) (13)}$

Eₖ (k ≧ 0) is an error for the learning parameter εₖ which can be expressed by 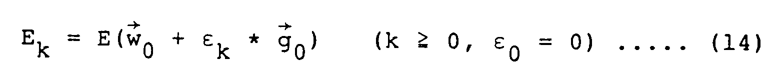
εᵥ is a value at the top of the parabola-approximated error curve; and Eᵥ is an error for the learning parameter εᵥ.

Fig. 13 is a PAD (Problem Analysis Diagram) for explaining the operation of straight-line searching in the learning machine with multi-input single-output circuits connected in a hierarchical structure according to this embodiment. In the straight-line searching, first, an error for the initial value ε₁ of the learning parameter is acquired. Specifically, the straight-line searching unit 67 multiplies the initial value ε₁ by the most sudden drop direction 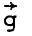 ₀ to provide a weight changing amount for the initial value ε₁; this weight changing amount is supplied to the weight changing unit 65 (Fig. 10). In the weight changing unit 65, the adder 73 acquires a sum of the weight changing amount in the output layer and the weight of the output layer, and the adder 74 acquires a sum of the weight changing amount in the secret layer and the weight of the secret layer. Thus, the weight changing unit 65 produce the weights for the initial value ε₁ of the learning parameter from the weight output terminal 26 for the output layer and the weight output terminal 27 for the secret layer. Using these weights, the output signals from the secret layer 22 and the output layer 21 are acquired, and further the error is acquired by the error calculation unit 14 by comparing the teacher signal with the output signal from the output layer 21. In this way, the initial value E₁ of the error for the initial value ε₁ of the learning parameter is acquired. As seen from the PAD of Fig. 13, the straight-line searching unit 67 compares the initial value E₁ of the error with the error E₀ at the starting point on the error curve. If E₁ is smaller than E₀, it can be expected that the error for the learning parameter having a larger value is smaller; the operation of increasing the learning parameter twice is repeated until the error starts to increase. In the first learning shown in Fig. 12, E₁ < E₀ so that the operation of multiplying the learning parameter ε twice is repeated to provide the error. Then, E₀ > E₁ > E₂ < E₃ so that the straight-line searching unit 67 acquires the weight changing amount for up to the learning parameter ε₃. On the other hand, if E₁ is larger than E₀, it can be expected that the error for the learning parameter having a smaller value is smaller; the operation of decreasing the learning parameter half is repeated until the error becomes smaller than the initial value of the error. Next, the straight line searching unit 67, in order for the parabola approximation unit 68 to approximate the neighborhoood of the error minimum point, calculates the errors at the points on the weight space in Fig. 12 where the weight varies at regular intervals. Specifically, assuming that

${\text{ε}}_{\text{2.5}} \text{= (ε₂ + ε₃)/2 (15)}$

and so ${\text{ε₂ - ε₁ = ε}}_{\text{2.5}} {\text{- ε₂ = ε₃ - ε}}_{\text{2.5}}$ , the error ε_{2.5} can be expressed by 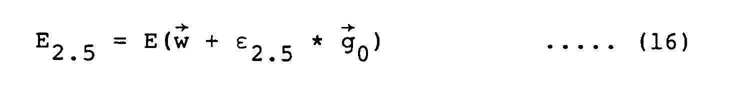
In Fig. 12, E_{2.5} < E₂ < E₃ < E₁, so that the errors E₂, E_{2.5}, E₃ at three points giving the minimum error and the learning parameters ε₂, ε_{2.5} and ε₃ are sent to the unit 72 of calculating the learning parameter at the top of the parabola in the parabola approximation unit 65. The unit 72 approximates the error curve in the neighborhood of the error minimum point by the parabola passing the three minimum error points to provide the error at the top. Namely, the calculation unit 72 calculates the learning parameter at the top of the parabola-approximated error curve using 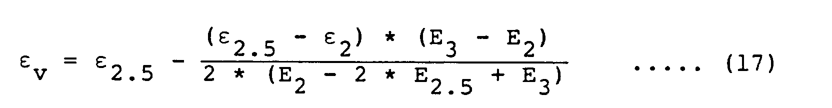
The multipliers 70 and 71 multiplies the most sudden drop g₀ by εᵥ to provide a weight changing amount; the weight changing unit 65 sets the weight for the learning parameter εᵥ; the secret layer 22 and the output layer 21 acquire the output signals (Fig. 9); and the error calculation unit 14 acquires the error Eᵥ. The parabola approximation unit 68 compares the errors thus obtained Eᵥ, E₂, E_{2.5} and E₃, and acquires the weight changing amount ε_{2.5} * g₀ for the learning parameter ε_{2.5}, which provides the smallest error E_{2.5}. The adders 73 and 74 acquire a sum of the weight changing amount and the weight 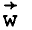 ₀, and store it as a new weight, respectively. Thus, the weight is changed as expressed by 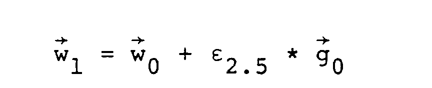
The explanation hitherto made relates to the first learning.

In the second learning, the most sudden drop direction calculation unit 28 acquires, as a weight changing direction, the most sudden drop direction g₁ at point P₁ expressed by w₁ in the weight space (Fig. 11). The learning initialization unit 66 sets the initial value of the learning parameter for ε₁ for the first learning and a larger value of the learning parameter used in the previous weight changing and ε₁ for the second learning et seq. Specifically, in the second learning et seq., if an optimum value of the previous learning parameter is larger than ε₁, the optimum value of the previous learning parameter is adopted as an initial value of the learning parameter; if the former is smaller than the latter, ε₁ is adopted as an initial value of the learning parameter. Thus, the optimum value of the previous learning parameter can be used as an initial value of the learning parameter in the present learning to effectively set the learning parameter which is optimum for the present learning. Also if the optimum value of the previous learning parameter is smaller than ε₁, it can be used as an initial value of the learning parameter for searching the error minimum point in the present learning to permit the error minimum point to reach a general error minimum point without being fallen into a local error minimum point. The straight-line searching unit 67 varies the learning parameter twice or half in the direction of 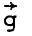 ₁ to provide a weight changing amount decreasing the error. The parabola approximation unit 68 parabola-approximates the error curve to acquire the weight giving a minimum error in the direction of 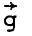 ₁, thus providing an error minimum point P₂ in the second learning. In this way, in the learning machine according to this embodiment, by repeating the searching the straight line for the most sudden drop direction to advance learning, the optimum learning parameter is dynamically set to decrease the error to approach the general error minimum point. In accordance with this embodiment, the straight line searching unit 65 can make the learning parameter variable when the weight is changed by the weight changing unit 65, and so makes it possible to dynamically set the learning parameter giving a minimum error in the weight changing direction to change the weight. Thus, the time required for the learning can be shortened.

Incidentally, although in this embodiment, the learning initialization unit 66 sets the initial value of the learning parameter for ε₁ for the first learning and a larger value of the learning parameter used in the previous weight changing and ε₁ for the second learning et seq., it may fix that initial value to ε₁. Moreover, although in this embodiment, the secret layer 22 consists of the multi-input single-output circuits each of which processes two input signals to provide an output signal, as in the general arrangement of the conventional learning machine as shown in Fig. 1, the secret layer 22 may consist of the multi-input single-output circuits the number of input/output signals of which may be optional connected in a hierarchical structure.

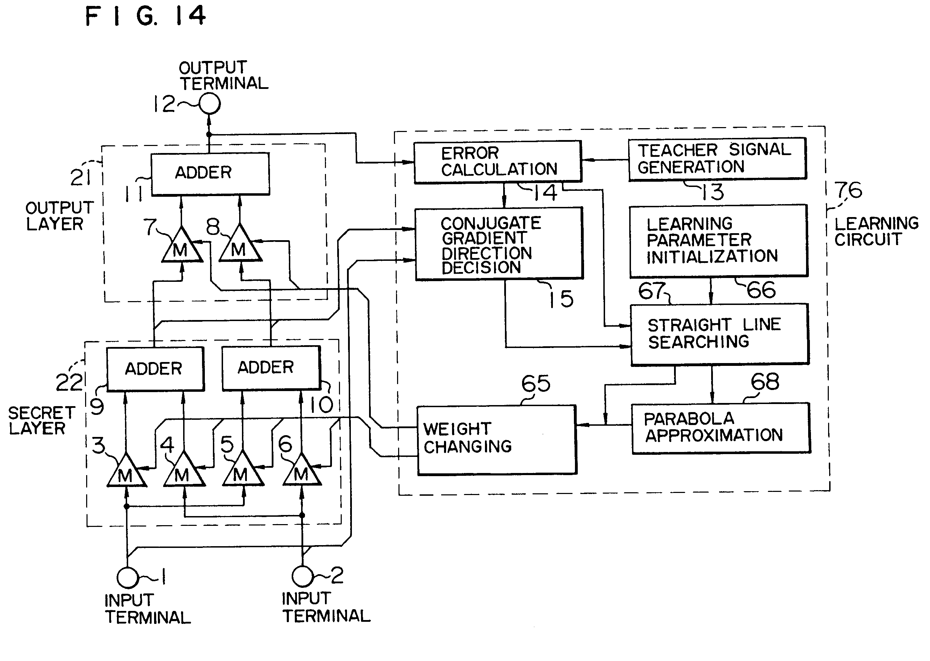

Fig. 14 shows an arrangement of the learning machine with multi-input single-output circuits connected in a hierarchical structure according to a third embodiment of the present invention. As seen from comparison to Fig. 9, a learning circuit 76 in this embodiment is different from the second embodiment of Fig. 9 in that the most sudden drop direction calculation unit 28 is replaced by the conjugate gradient direction decision unit as shown in Fig. 6. In this embodiment, the error calculation unit 14 calculates an error from the difference between a teacher signal and an actual output signal. The conjugate gradient direction decision unit 15 sets the weight changing direction for the most sudden drop direction expressed by Equation (4) for the first learning and for the second learning et seq., sets the most sudden drop direction for the learning to be carried out every number of times equal to the number of weights and the conjugate gradient direction for the learning to carried every other number of times. The learning initialization unit 66 sets the initial value of the learning parameter for ε₁ for the first learning and a larger value of the learning parameter used in the previous weight changing and ε₁ for the second learning et seq., the straight-line searching unit 67, if the error for an initial value of the learning parameter is smaller than an initial error, repeats an operation of varying the value of the learning parameter ε twice until the error starts to increase, or the unit 67, if the error for an initial value of the learning parameter has exceeded the initial error, repeats an operation of varying the value of the learning parameter half until the error becomes smaller than the initial error.

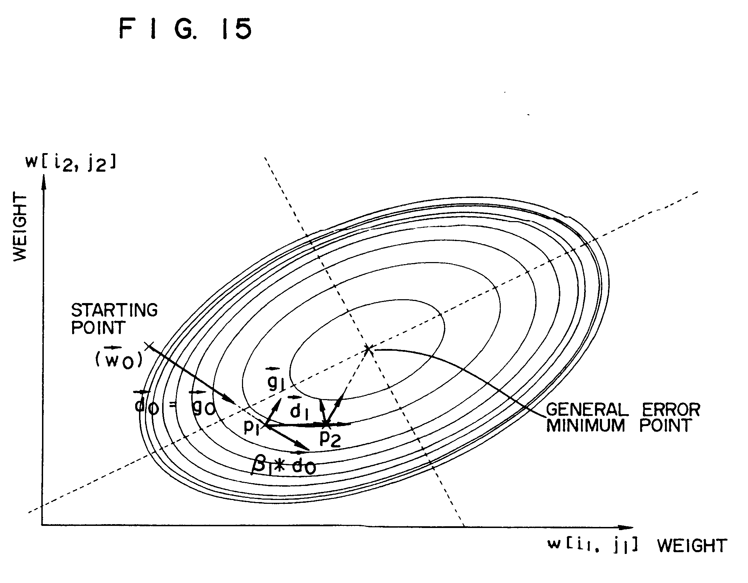

Fig. 15 schematically shows countour lines in the error curve for explaining the operation in this embodiment. In Fig. 15, w[i₁,j₁] and w[i₂,j₂] are weights to be imposed by optional two multipliers of the variable multipliers 3, 4, 5, 6, 7 and 8; 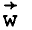 ₀ is vector representation of the value of weight initialized by a random number; 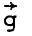 ₀ is the most sudden drop direction in first learning; P₁ is an error minimum point in the first learning; 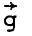 ₁ is the most sudden drop direction at point P₁; β₁ is a constant obtained by Equation (12) in acquiring the conjugate gradient direction at P₁; 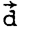 ₁ is the conjugate gradient direction at P₁ expressed by Equation (11); and P₂ is an error minimum point in second learning. Fig. 15 is different from Fig. 11 in that the conjugate gradient direction is adopted as the weight changing direction in the second learning.

In this embodiment, the error minimum point P₁ in the first learning is acquired as in the second embodiment. Thereafter, the weight changing direction in the second learning is set for the conjugate gradient direction expressed by Equation (11) using the most sudden drop direction 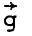 ₁ at P₁ and the weight changing direction 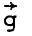 ₀ (= 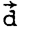 ₀) in the first learning. The error minimum point P₂ for the direction of 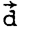 ₁ can be acquired by the straight-line searching for the direction of 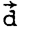 ₁. If the conjugate gradient direction is adopted as the weight changing direction as in Fig. 15, the error can be minimized by the learning carried out in the smaller number of times than in the case of Fig. 11 where the most sudden drop direction is adopted as the weight changing direction. The reason therefor is that the conjugate gradient method, in which the weight changing directions in a weight space at respective times of learning are set to be different from one another, can change the weight generally more effectively than the most sudden drop method in which the weight is changed on the basis of the local gradient on a weight curve. In this way, in accordance with this embodiment, a weight changing direction is set for the conjugate gradient direction by the conjugate gradient direction decision unit 15, the value of a learning parameter is acquired by the straight-line searching unit 67 and the parabola approximation unit 68 so that the error can be minimized in the weight changing direction, and the value of the learning parameter is used to change the weight by the weight changing unit 65. Thus, the time required for learning can be shortened.

Additionally, although in this embodiment, the conjugate gradient direction decision unit 15 sets the weight changing direction for the most sudden drop direction expressed by Equation (4) for the first learning and for the second learning et seq., sets the most sudden drop direction for the learning to be carried out every number of times equal to the number of weights and the conjugate gradient direction for the learning to carried every other number of times, it may set for the second learning et seq., sets the most sudden drop direction for the learning to be carried out every half number of times equal to the number of weights and the conjugate gradient direction for the learning to carried every other number of times. Moreover, if the error does not become smaller than the initial value although the straight-line searching in the conjugate gradient direction has been done to make the learning parameter smaller than a predetermined value εₘᵢₙ, the weight changing direction may be changed from the conjugate gradient direction to the most sudden drop direction. In this way, by changing the weight changing direction to the most sudden drop direction when the conjugate gradient direction is nor suitable as the weight changing direction, the general error minimum point can be reaches in a shorter time, it may fix that initial value to ε₁. Moreover, although in this embodiment, the secret layer 22 consists of the multi-input single-output circuits each of which processes two input signals to provide an output signal, as in the general arrangement of the conventional learning machine as shown in Fig. 1, the secret layer 22 may consist of the multi-input single-output circuits the number of input/output signals of which may be optional connected in a hierarchical structure.

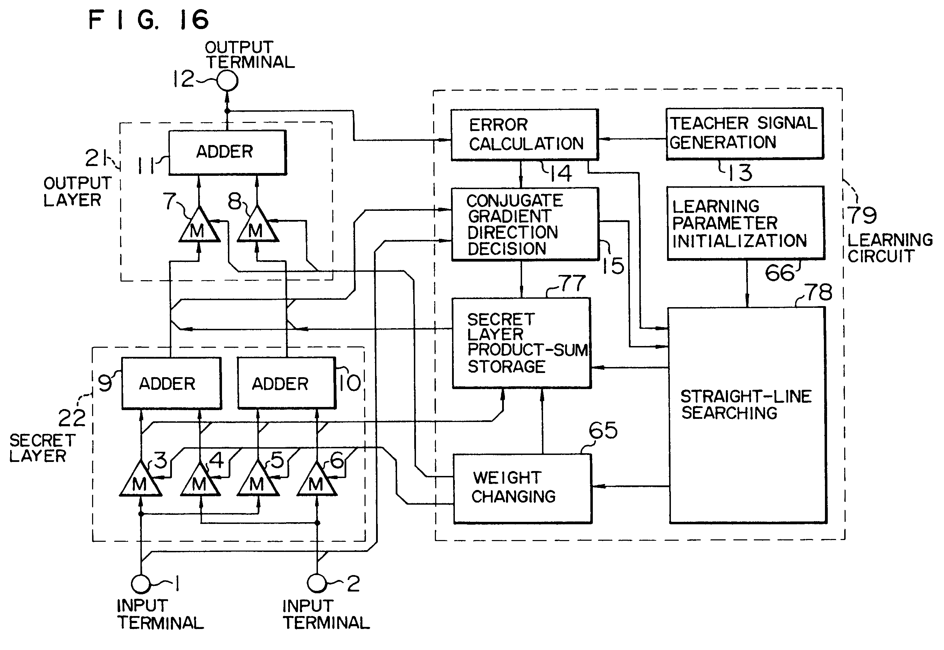

Fig. 16 shows an arrangement of the learning machine with multi-single-output circuits connected in a hierarchical structure according to a fourth embodiment of the present invention. In Fig. 16, 77 is a secret layer product-sum storage unit; 78 is a straight line searching unit; and 79 is a learning circuit. In this embodiment, the error calculation unit 14 calculates an error from the difference between a teacher signal and an actual output signal. The conjugate gradient direction decision unit 15 sets the weight changing direction for the most sudden drop direction expressed by Equation (4) for the first learning and for the second learning et seq., sets the most sudden drop direction for the learning to be carried out every number of times equal to the number of weights and the conjugate gradient direction for the learning to carried every other number of times.
The learning initialization unit 66 sets the initial value of the learning parameter for ε₁ for the first learning and a larger value of the learning parameter used in the previous weight changing and ε₁ for the second learning et seq. The straight-line searching unit 78 in this embodiment is a combination of the straight-line searching unit 67 and the parabola-approximation unit 68 in Fig. 14. The straight-line searching unit 78, therefore, if the error for an initial value of the learning parameter is smaller than an initial error, repeats an operation of varying the value of the learning parameter ε twice to provide a weight changing amount until the error starts to increase, or the unit 67, if the error for an initial value of the learning parameter has exceeded the initial error, repeats an operation of varying the value of the learning parameter half to provide a weight changing amount until the error becomes smaller than the initial error. Thereafter, the straight-line searching unit 72 approximates the error curve in the neighborhood of the error minimum point by the parabola passing the three minimum error points to provide the error at the top. In this way, with the weight changing direction fixed, the straight-line searching unit 78 varies the learning parameter to a weight changing amount giving a minimum error; this embodiment is different from the third embodiment in that the output signal from the secret layer is acquired through the secret layer product-sum storage unit.

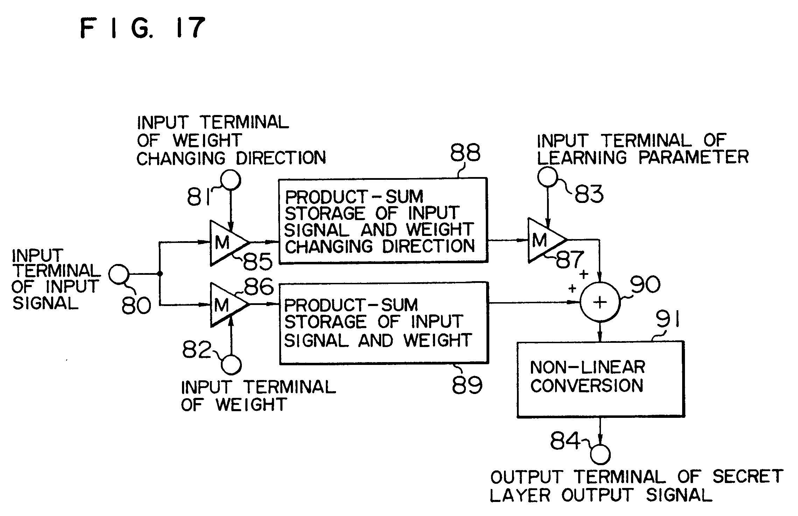

Fig. 17 shows the details of the secret layer product-sum storage unit 77 in a block form. In Fig. 17, 80 is the input terminal of input signals; 81 is the input terminal of changing directions; 82 is the input terminal of weights; 83 is the input terminal of a learning parameter; 84 is the output terminal of a secret layer output signal; 85, 86 and 87 are multipliers; 88 is a unit of storing the product-sum of the input signals and the changing directions; 90 is an adder; and 91 is a non-linear conversion unit. The secret layer output signal yₚ[j] for the input signal yₚ[i] can be expressed by 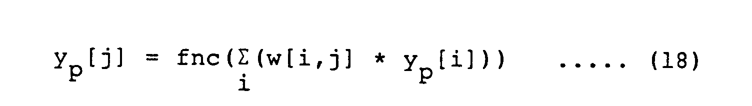
where w[i,j] is the weight imposed for the input signal yₚ[i] when it is supplied to a j-th multi-input single-output circuit, and fnc( ) is a characteristic function of the adders included in the secret layer; this characteristic function is a non-linear function having a saturation characteristic. Assuming that the component of the weight changing direction d acquired by the conjugate gradient direction decision unit 15 corresponding to the changing amount of w[i,j], the secret layer output signal yₚ[i,j] for a learning parameter ε is expressed by 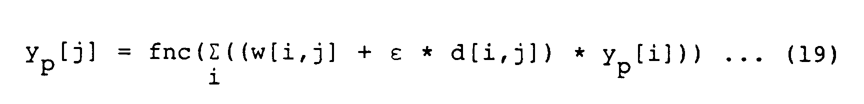
Therefore, it is necessary to carry out the multiplication twice the number of the input signals whenever yₚ[j] is to be acquired. In this embodiment, by previously storing, in the storage unit 89 for the input signals and the weights, 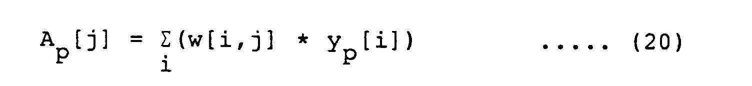
and in the storage unit 89 for the input signals and the weight changing directions, 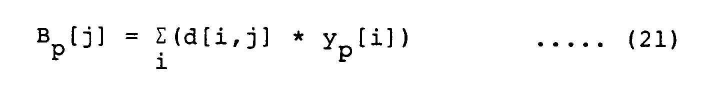
the secret layer output signal yₚ[j] for the learning parameter ε can be acquired by 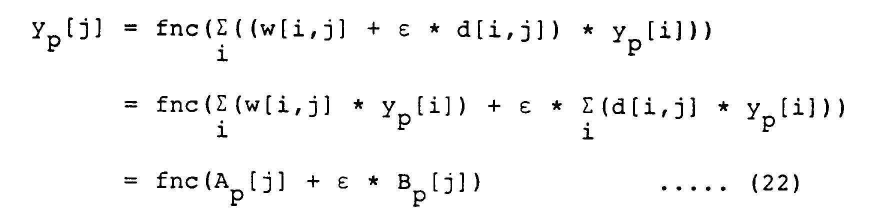
Namely, the multiplier 87 multiplies the output Bₚ[j] from the product-sum storage unit 88 for input signals and weight changing directions is by the learning parameter ε, and the adder 90 acquires the sum (Aₚ[j] + ε * Bₚ[j]) of ε * Bₚ[j] thus obtained and the output Aₚ[j] from the product-sum storage unit 89 for input signals and weights. The non-linear conversion unit 91 subjects the output from the adder 90 to the non-linear conversion equivalent to the characteristic function of the adders in the secret layer to provide yₚ[j] expressed by Equation (22). Thus, although in the straight line searching for the weight changing direction d, the multiplication by the same number of times as in the third embodiment must be made to provide the initial value of a learning parameter, the secret layer output signal yₚ[j] for the other learning parameter can be acquired by making the multiplication only once. This can greatly reduce the number of operations in the straight-line searching thereby shorten the time required for learning.

Additionally, although the weight changing direction is set for the conjugate gradient direction acquired by the conjugate gradient direction decision unit 15, it may be set for the sudden drop direction. Moreover, although in this embodiment, the secret layer 22 consists of the multi-input single-output circuits each of which processes two input signals to provide an output signal, as in the general arrangement of the conventional learning machine as shown in Fig. 1, the secret layer 22 may consist of the multi-input single-output circuits the number of input/output signals of which may be optional connected in a hierarchical structure.

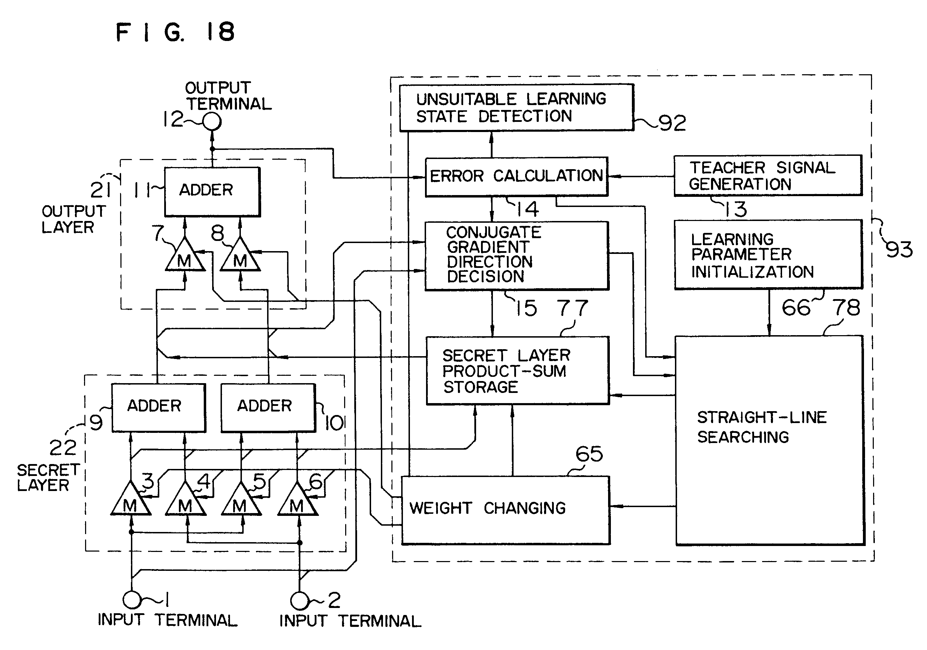

Fig. 18 shows an arrangement of the learning machine with multi-input single-output circuits connected in a hierarchical structure according to a fifth embodiment of the present invention. In Fig. 18, 92 is an unsuitable learning state detection unit, and 93 is a learning machine. In the learning machine according to this embodiment, the conjugate gradient direction decision unit 15 decides a weight changing direction; the straight-line searching unit 78 sets plural learning parameters in the weight changing direction to provide a weight changing amount giving a minimum error; and the weight changing unit 65 changes the weight. The unsuitable learning detection unit 92 compares the error before the weight changing with that after the weight changing; when that the weight changing direction is the most sudden drop direction and also the decreasing rate of the error is smaller than a certain value is detected, the unit 92 decides that the learning has been fallen in a state where further advancing of the learning cannot effectively reduce the error, and initializes the weight by a random number to resume the learning. Thus, in accordance with this embodiment, when that the learning has been fallen into the ineffective state is detected by the unsuitable state detection unit 92, the weight is readjusted to resume the learning; this prevents the learning from being fallen into the ineffective state thereby to shorten the time required for the learning.

Additionally, although in this embodiment, the unsuitable state detection unit 92 detects the unsuitable learning state by detecting that the weight changing direction is the most sudden drop direction and also the error decreasing rate is smaller than a certain value, the unsuitable state may be detected by detecting that the absolute value of the weight is larger than a certain value. Moreover, although in this embodiment, the weights are adjusted by initializing all the weights by random numbers, they may be adjusted by equally compressing all the weights or only the weight having the most largest value. Further, although in this embodiment, the secret layer 22 consists of the multi-input single-output circuits each of which processes two input signals to provide an output signal, as in the general arrangement of the conventional learning machine as shown in Fig. 1, the secret layer 22 may consist of the multi-input single-output circuits the number of input/output signals of which may be optional connected in a hierarchical structure.

## Claims

1. A learning machine with multi-input single-output circuits connected in a hierarchical structure comprising:
a secret layer (22) consisting of plural multi-input single-output circuits which subject a weighted sum of input signals to non-linear processing by a characteristic function having a saturation characteristic to provide output signals;
an output layer (21) consisting of plural multi-input single-output circuits which subject a weighted sum of the output signals from said secret layer to a non-linear processing by a characteristic function having a saturation characteristic to provide output signals;
a teacher signal generating unit (13) for generating desired teacher signals for said output layer; and a weight changing unit (65),
said machine being characterised by
a line searching unit (67) for producing weight changing amounts for plural learning parameters with respect to the weight changing direction; and
said weight changing unit (65) selects weight changing amounts from the weight changing amounts acquired by said line searching unit.

2. A learning machine according to claim 1, including
a secret layer product-sum storage unit (77) for storing a product sum of input signals and weights of the secret layer and a product sum of the input signals and the direction of changing the weight of the secret layer.

3. A learning machine according to claim 1, including
an unsuitable learning state detecting unit (92) for detecting that the learning has been fallen into an unsuitable state where further advancing the learning does not effectively reduce the error.

4. A learning machine according to claim 1, including
a secret layer product-sum storage unit (77) for storing a product sum of input signals and weight of the secret layer and a product sum of the input signals and the direction of changing the weight of the secret layer; and
an unsuitable learning state detecting unit (92) for detecting that the learning has been fallen into an unsuitable state where further learning does not effectively reduce the error.

5. A learning machine according to claim 1, wherein said weight changing unit (65) changes the weights by the weight changing amount giving a minimum error.

6. A learning machine according to claim 1, wherein in producing the weight changing amounts for plural learning parameters with respect to the weight changing direction, said straight-line searching unit sets, for second learning et seq., an initial value of the learning parameters for a larger value of an optimum value in the previous learning and a fixed value.

7. A learning machine according to claim 3, wherein said unsuitable state detection unit detects the unsuitable learning state by detecting that the weight changing direction is the most sudden drop direction, and the decreasing rate is smaller than a prescribed value.

8. A learning machine according to claim 3, wherein said unsuitable state detection unit detects the unsuitable learning state by detecting that the weight changing direction is the most sudden drop direction, and the decreasing rate is smaller than a prescribed value, and initialises each weight by a random number to resume the learning.

9. A learning machine according to claim 3, wherein said unsuitable state detection unit detects the unsuitable learning state by detecting that the weight changing direction is the most sudden drop direction, and the decreasing rate is smaller than a prescribed value, and compresses equally all the weights to readjust them to resume the learning.

10. A learning machine according to claim 3, wherein said unsuitable state detection unit detects the unsuitable learning state by detecting that the absolute value of each weight is larger than a prescribed value.

11. A learning machine according to claim 3, wherein said unsuitable state detection unit detects the unsuitable learning state by detecting that the absolute value of each weight is larger than a prescribed value and initialises each weight by a random number to resume the learning.

12. A learning machine according to claim 3, wherein said unsuitable state detection unit detects the unsuitable learning state by detecting that the absolute value of each weight is larger than a prescribed value and compresses equally all the weights to resume the learning.

13. A learning machine according to claim 3, wherein said unsuitable state detection unit detects the unsuitable learning state by detecting that the absoute value of each weight is larger than a prescribed value and compresses only the weight having the largest absolute value to resume the learning.
